(19) Europäisches Patentamt
European Patent Office
Office européen des brevets

(11) **EP 3 215 810 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **15794068.5**

(22) Anmeldetag: **09.10.2015**

(51) Int Cl.:
*G01D 5/04* (2006.01)  *G01D 5/14* (2006.01)
*G01D 18/00* (2006.01)

(86) Internationale Anmeldenummer:
**PCT/DE2015/200474**

(87) Internationale Veröffentlichungsnummer:
**WO 2016/070877 (12.05.2016 Gazette 2016/19)**

(54) **VERFAHREN ZUM KALIBRIEREN EINER ABSOLUTWEGMESSEINRICHTUNG EINES SPINDELAKTORS FÜR EINE HYDRAULISCHE GEBEREINHEIT, VERFAHREN ZUM STEUERN DER POSITION EINER SPINDELMUTTER EINES SPINDELAKTORS FÜR EINE HYDRAULISCHE GEBEREINHEIT UND SPINDELAKTOR FÜR EINE HYDRAULISCHE GEBEREINHEIT**

METHOD FOR CALIBRATING AN ABSOLUTE DISPLACEMENT MEASUREMENT DEVICE OF A SPINDLE ACTUATOR FOR A HYDRAULIC MASTER UNIT, METHOD FOR CONTROLLING THE POSITION OF A SPINDLE NUT OF A SPINDLE ACTUATOR FOR A HYDRAULIC MASTER UNIT, AND SPINDLE ACTUATOR FOR A HYDRAULIC MASTER UNIT

PROCÉDÉ D'ÉTALONNAGE D'UN DISPOSITIF DE MESURE DE TRAJET ABSOLU D'UN ACTIONNEUR À BROCHE DESTINÉ À UNE UNITÉ DE TRANSMISSION HYDRAULIQUE, PROCÉDÉ DE COMMANDE DE LA POSITION D'UN ÉCROU DE BROCHE D'UN ACTIONNEUR À BROCHE POUR UNITÉ DE TRANSMISSION HYDRAULIQUE ET ACTIONNEUR À BROCHE POUR UNITÉ DE TRANSMISSION HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2014 DE 102014222354**

(43) Veröffentlichungstag der Anmeldung:
**13.09.2017 Patentblatt 2017/37**

(73) Patentinhaber: **Schaeffler Technologies AG & Co. KG**
**91074 Herzogenaurach (DE)**

(72) Erfinder:
• **FRANZ, Viktor**
**76137 Karlsruhe (DE)**
• **BUNOUT, Felix**
**76137 Karlsruhe (DE)**

(56) Entgegenhaltungen:
**DE-A1-102010 010 215     DE-A1-102011 103 576**
**FR-A1- 2 964 734     US-A1- 2009 031 578**
**US-A1- 2011 219 851     US-A1- 2014 105 768**

**Beschreibung**

Die Erfindung betrifft ein Verfahren zum Kalibrieren einer Absolutwegmesseinrichtung eines Spindelaktors für eine hydraulische Gebereinheit, ein Verfahren zum Steuern der Position einer Spindelmutter eines Spindelaktors für eine hydraulische Gebereinheit und einen Spindelaktor für eine hydraulische Gebereinheit, sowie eine Reibkupplung, insbesondere für ein Kraftfahrzeug.

Aus dem Stand der Technik sind Spindelaktoren für eine hydraulische Gebereinheit bekannt, insbesondere für eine Betätigungseinrichtung einer Reibkupplung eines Kraftfahrzeugs, bei denen eine rotatorisch fixierte Spindelmutter mittels einer Antriebsspindel translatorisch bewegbar ist. Hierzu wird beispielsweise auf die DE 10 2010 047 801 A1 verwiesen. Eine entsprechende weitere hydraulische Gebereinheit mit zugeordneter Reibkupplung ist z.B. auch aus der US 2014/105768 A1 bekannt. Um die Position der Spindelmutter zu steuern beziehungsweise zu regeln, wird im Stand der Technik beispielsweise ein translatorischer Absolutwegsensor zur Messung der translatorischen Absolutwegposition direkt an der Spindelmutter eingesetzt. Solch ein Absolutwegsensor kann im Betrieb zu jedem Zeitpunkt eindeutig feststellen, an welcher Position sich die Spindelmutter befindet, ohne dass hierzu eine weitere Referenz benötigt wird. Ein solcher Sensor gibt aber über die Winkelstellung der Antriebsspindel keinen beziehungsweise nur indirekten Aufschluss, nämlich über eine Berechnung des geometrischen Zusammenhangs (der Gewindesteigung). Die Winkelstellung der Antriebsspindel wird aber als Regelungswert für den (elektrischen) Antrieb der Antriebsspindel benötigt. Insbesondere bei einer üblicherweise eingesetzten spielbehafteten Übertragung zwischen Antriebsspindel und Spindelmutter ist diese berechnete Winkelstellung für eine Steuerung, zum Beispiel für eine korrekte Kommutierung eines Servomotors, nicht ausreichend genau. Daher wird stets zusätzlich ein Rotorlagesensor (oder Winkelsensor) eingesetzt, welcher die Winkellage der Antriebsspindel direkt registriert. Der Absolutwegsensor ist teuer und zudem meist räumlich getrennt und daher oftmals über bauraumintensive zusätzliche Steckverbindungen und/oder aufwendigere Kapselungen zu integrieren.

Weiterhin ist eine Konfiguration bekannt, bei der lediglich ein Rotorlagesensor (oder Winkelsensor) vorgesehen ist. Hierbei wird inkrementell durch Zählen jeder vollständigen Umdrehung der Antriebsspindel und indirekt mittels Berechnens des geometrischen Zusammenhangs zwischen Gewindesteigung und translatorischer Verschiebung der Spindelmutter auf die Position der Spindelmutter geschlossen. Bei dieser Konfiguration ist es notwendig, zumindest einen Referenzanschlag oder einen Referenzsensor vorzusehen, bei welchem eine Ausgangslage definiert wird. Das bedeutet, dass bei einem (Speicher-) Verlust der Steuerung beziehungsweise bei einem Fehler beim Zählen der vollständigen Umdrehungen, und damit Verlust des Relativbezugs zum Referenzanschlag, der Referenzanschlag oder Referenzsensor angefahren werden muss. Dabei wird ein hoher Zeitverbrauch benötigt, insbesondere wegen eines meist notwendigen zusätzlichen Plausibilisierungsvorgangs. Der Plausibilisierungsvorgang ist zum Beispiel notwendig, um eine mögliche Schwergängigkeit oder andere Anschläge von dem Referenzanschlag sicher unterscheiden zu können. Nachteilig ist hierbei auch, dass die mechanischen Anforderungen an einen solchen Aktor besonders hoch sind, weil zum einen eine hohe Laufgüte und zum anderen eine hohe Anschlagfestigkeit für den Referenzanschlag benötigt werden.

Um eine inkrementelle Winkellageerfassung einer Welle mit mehr als einer vollen Umdrehung zu vermeiden, ist es bekannt, zumindest zwei mit der Welle mit abweichender Periodizität übersetzungsfeste Messwellen vorzusehen, wobei sich eine verminderte Anzahl an, beziehungsweise keine, gleichen Winkelstellungen über eine Mehrzahl voller Umdrehungen einer Welle ergeben, sodass keine inkrementelle Berechnung der Winkellage der Welle notwendig ist. Ein solches Verfahren ist zum Beispiel aus der DE 195 06 938 A1 bekannt. Nachteilig bei einer solchen Vorrichtung ist, dass bei einer Verwendung von magnetischen Sensoren (zum Beispiel GMR: Riesenmagnetowiderstand; engl.: Giant Magnetoresistance) die magnetischen Felder sich gegenseitig stören, also umlenken, können, wenn diese nicht ausreichend weit voneinander beabstandet sind. Hierdurch wird die Auslesung aufgrund eines nichtlinearen Zusammenhangs erheblich erschwert. Eine Lösung dafür ist in der DE 10 2009 048 389 A1 beschrieben, indem dort Magnetflussleitbleche und/oder Abschirmungen zur Vermeidung von gegenseitiger Beeinflussung auf engem Raum vorgesehen werden. Diese Lehre erfordert jedoch einen erheblichen Aufwand bei der Gestaltung der Messeinrichtung. Eine weitere Lösung unter Verwendung von Hall-Sensoren, welche Messmagneten auf zwei Wellen zugeordnet sind, ist aus der DE 10 2010 010215 A1 bekannt.

Hiervon ausgehend stellt sich die vorliegende Erfindung der Aufgabe, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausführungsformen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft ein Verfahren zum Kalibrieren einer Absolutwegmesseinrichtung eines Spindelaktors für eine Gebereinheit mit den Merkmalen des Patentanspruchs 1.

Der zur Ausübung dieses Kalibrierverfahrens eingerichtete Spindelaktor weist eine Antriebsspindel auf, welche über eine Mehrzahl von Gewindegängen mit einer definierten, also bekannten, Gewindesteigung eine translatorische Bewegung einer rotatorisch fixierten Spindelmutter ermöglicht. Es besteht also ein klarer geometrischer Zusammenhang zwischen einer Drehung der Antriebsspindel beziehungsweise eines vorliegenden Gewindegangs und der translatorischen, beziehungsweise axialen, (Absolutweg-) Position der Spindelmutter. Die Spindelmutter ist dabei zwischen einer Anfangsstellung und einer Endstellung entlang eines dazwischen liegenden vorbestimmten maximalen Verfahrwegs axial hin und her bewegbar. Auf diesen maximalen Verfahrweg ist die Übersetzung zwischen der Antriebsspindel und der Messwelle eingerichtet, sodass die Messwelle über eine vollständige Umdrehung der Antriebswelle bei jedem Gangwechseln jeweils in einem anderen Winkel im Vergleich zu allen anderen Gangwechseln ausgerichtet ist. Ein Gangwechsel wird bei einer vorbestimmten Winkelposition des ersten Messmagneten an der Antriebsspindel definiert und wiederholt sich also nach jeder vollen Umdrehung der Antriebsspindel. Daraus folgend ist die Spindelmutter bei einer vollen Umdrehung axial um den Betrag der Gewindesteigung fortbewegt worden.

Die Messwelle ist nun mittels einer festen Übersetzung verbunden, die eine unterschiedliche Periodizität bewirkt. Das bedeutet, dass die Messwelle eine volle Umdrehung entweder schneller oder langsamer durchläuft als die Antriebswelle. Diese Übersetzung ist dabei derart eingerichtet, dass über den gesamten Verfahrweg der Antriebsspindel die Messwelle zum Zeitpunkt eines Gangwechsels an der Antriebsspindel nie an der gleichen Stelle also der gleichen Winkelposition steht. Damit ist infolge der Erfassung des zweiten Winkelmesssignals bei einem Gangwechsel der Antriebsspindel der anliegende Gewindegang eindeutig bestimmbar. In einer Konfiguration ist die Übersetzung derart gewählt, dass die Messwelle weniger als eine einzige volle Umdrehung ausführt, wenn der maximale Verfahrweg von der Anfangsstellung bis zur Endstellung und umgekehrt ausgeführt wird. Die Antriebsspindel hingegen führt hierbei gleichzeitig eine Vielzahl von vollen Umdrehungen aus. Diese Umsetzung erfordert aber eine große oder zumindest aufwendige (eventuell spielbehaftete) Übersetzungseinrichtung. Vorteilhaft ist es daher, eine Übersetzung einzurichten, die nahe bei eins liegt. Zur Auslegung ist hierzu die folgende Formel geeignet:

$$\textit{für}: \quad \psi(x) = 2\pi x$$

$$\varphi(x) = \mu 2\pi x\left(m + \frac{1}{N}\right) + \alpha_0 = \mu\psi(x)\left(m + \frac{1}{N}\right) + \alpha_0$$

Während $\psi$ die Winkelstellung des ersten Messmagneten an der Antriebsspindel beschreibt, beschreibt $\varphi$ hierbei die Winkelstellung des zweiten Messmagneten der Messwelle. Für die Messpunkte werden beliebige Faktoren ($x \in \mathbb{R}$ - Element der reellen Zahlen) gewählt, welche jedoch in ganzzahligen Abständen gewählt werden, also einem Gangwechsel entsprechen. In der Regel wird der Anfangswinkel als nullter Gewindegang mit $x_0 = 0$ gewählt. Bei jeder vollen Umdrehung ($2\pi$) der Antriebsspindel also jedem Gangwechsel durchläuft die Messwelle in der gleichen Zeit mehr oder weniger (bei direkter, also gegenläufiger, Radübersetzung entgegengesetzte, also negative) Umdrehungen.

Dieser Zusammenhang ist durch den Faktor aus der Summe aus einer ersten Ganzzahl (Modulor $m \in \mathbb{Z}_0$ - Element der ganzen Zahlen mit Null, also: ..., -3, -2, -1, 0, 1, 2, 3, ...) und aus dem Kehrwert einer zweiten Ganzzahl ($N \in \mathbb{Z}$ - Element der ganzen Zahlen ohne Null, also: ..., -3, -2, -1, 1, 2, 3, ...). Hierbei ist die zweite Ganzzahl ($N$) dem Betrag nach größer als die Anzahl der Gewindegänge der Antriebsspindel. Der Winkel $\alpha_0$ repräsentiert einen eventuell vorliegenden Phasenversatz gegenüber der Antriebsspindel und ist grundsätzlich ein beliebiger Winkel; dieser kann zum Beispiel fertigungsbedingt festgelegt werden. In den folgenden Beispielen wird dieser Phasenversatz als $\alpha_0 = 0$ angenommen.

Aufgrund dieses Zusammenhangs ist der zweite Messmagnet über den gesamten Verfahrweg der Spindelmutter bei jedem (unterschiedlichen) Gangwechsel stets an einer anderen Winkelposition. Dazwischen aber, werden bei einem Modulor $m \neq 0$ (erste Ganzzahl) gleiche Winkelstellungen durchfahren, wobei dann aber die Winkelstellung des ersten Messmagneten von dem definierten Gangwechsel, oder mathematisch ausgedrückt von einem ganzzahligen Abstand ausgehend vom Anfangspunkt ($x_0$), abweicht und daher nicht ausgelesen werden. Die Auslesung findet also immer bei $x_0 + n$ (mit $n \in 0, 1, 2, 3, ...$) statt; das sind die Gangwechsel.

Für eine besonders bauraumgünstige Konfiguration läuft die Messwelle mit einer wenig aufwendigen Übersetzungseinrichtung leicht nach oder leicht vor, also wird dafür die erste Ganzzahl $m = 1$ gesetzt. Besonders günstiger Weise für möglichst große Abstände zwischen den einzelnen Winkelstellungen des zweiten Messmagneten bei den jeweiligen Gangwechseln ist $N = G + 1$, wobei $G$ die Anzahl der Gewindegänge ist, also bei $x_0 = 0$ ist $n_{max} = G$. Es sind aber auch deutlich schnellere und deutlich langsamere Übersetzungen gemäß diesem Zusammenhang möglich. In diesem Beispiel mit beispielsweise 32 Gewindegängen wird die zweite Ganzzahl vorteilhafter Weise auf 33 gesetzt.

Erst beim theoretisch 33ten Gewindegang ist der Faktor der Periodizität der Messwelle wieder ganzzahlig:

$$\left(n_{\max}+1\right)\left(\frac{1}{N}\right)=(G+1)\left(\frac{1}{G+1}\right)=1$$

Und erst damit würde sich eine doppelte Konstellation (wie beim nullten Gewindegang) der beiden Messmagnete wiederholen, jedoch weist die Antriebsspindel keinen 33ten Gewindegang auf.

Aus jeder vollen Umdrehung folgt eine axiale Verschiebung der Spindelmutter um den Betrag der Gewindesteigung, weil ein Gewindegang zurückgelegt wird. Daher ist die Registrierung eines Gangwechsels, also der Übergang zwischen zwei vollen Umdrehungen oder der Übergang vom Ende einer Gewindesteigung zur nächsten Gewindesteigung ein markanter und nützlicher Punkt für die Bestimmung der Position der Spindelmutter.

Die Übersetzung zwischen der Messwelle und der Antriebsspindel ist bevorzugt über einen Zahnkranz oder ein Zahnrad übertragbar, ist aber auch schlupffrei zum Beispiel reibschlüssig oder über einen Umschlingungstrieb übertragbar. Wenn es die gewünschte Präzision der Messung, beziehungsweise die gewünschte Kleinschrittigkeit der Messung, zulässt, ist die Übersetzung auch spielbehaftet ausführbar. Das oben aufgezeigte Beispiel einer geeigneten Übersetzung bei 32 Gewindegängen ist zum Beispiel mittels einer Zahnradpaarung mit einem ersten Zahnrad an der Antriebsspindel mit 33 Zähnen und einem zweiten Zahnrad an der Messwelle mit 32 Zähnen ausführbar, oder einem ganzzahligen Vielfachen davon. Mit anderen Worten entspricht die Periodizität der Antriebsspindel der Anzahl der Zähne der Messwelle.

Die Messmagneten sind an der Antriebsspindel oder einem zur Antriebsspindel rotatorisch fixierten Fortsatz beziehungsweise an der Messwelle an einer festen Winkelposition angeordnet, sodass ihre Winkellage einen Rückschluss auf die Umdrehung der Antriebsspindel beziehungsweise der Messwelle zulässt.

Gemäß des erfindungsgemäßen Verfahrens übt der zweite Messmagnet maximal einen derart vernachlässigbaren Einfluss auf das erste Winkelmesssignal aus, dass das erste Winkelmesssignal eindeutig ist, und der erste Messmagnet beeinflusst das zweite Winkelmesssignal derart, dass das zweite Winkelmesssignal uneindeutig ist, wobei zusätzlich zumindest folgende Schritte ausgeführt werden:

a'. Durchfahren der einzelnen Gewindegänge der Antriebsspindel,
b'. bei jedem Gangwechsel Erfassen des zweiten Winkelmesssignals;
c'. Speichern des zweiten Winkelmesssignals als Kalibrierungswert zugeordnet zu dem jeweilig anliegenden Gangwechsel.

Die zwei Messmagnete sind dabei derart angeordnet, dass ihre Magnetfelder sich zumindest im Bereich des zweiten Winkelsensors beeinflussen, sodass das zweite Winkelmesssignal des zweiten Messmagneten gegenüber einer idealen Messung ohne den ersten Messmagneten (deutlich) verfälscht ist. Das erste Winkelmesssignal des ersten Messmagneten ist dabei eindeutig, weil der Einfluss des zweiten Messmagneten unabhängig von dessen zweiter Winkelposition vernachlässigbar ist.

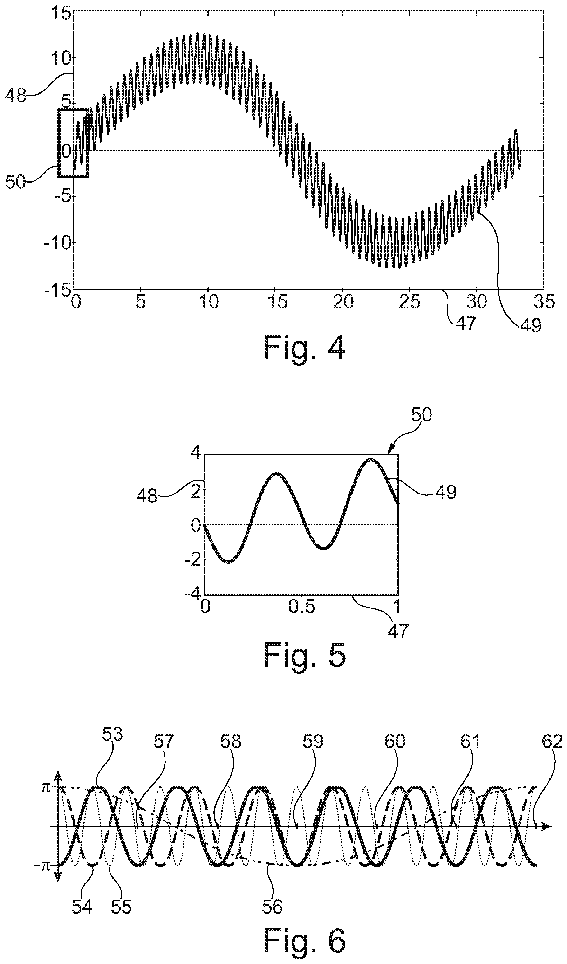

Bei einer Überschneidung der Magnetfelder im Bereich des zweiten Winkelsensors kommt es jedoch zu Messwerten, die keinen eindeutigen Rückschluss auf eine bestimmte Winkelstellung der zweiten Messwelle erlauben. Vielmehr sind mehrere Winkellagen der Messwelle einem zweiten Winkelmesssignal zugeordnet (vergleiche Figuren 4 und 5). Das zweite Magnetfeld des zweiten Messmagnets beeinflusst das erste Magnetfeld des ersten Messmagnets zumindest im Bereich der Erfassung mittels des ersten Winkelsensors nicht oder nur vernachlässigbar, sodass es nur eindeutige Messwerte, beziehungsweise Messwertbereiche, gibt, die eindeutig einer Winkellage des ersten Winkelsensors der Antriebsspindel zuordbar sind. Daher ist mittels des ersten Winkelsensors eine konventionelle inkrementelle Positionsbestimmung möglich.

Zum Kalibrieren dieser Absolutwegmesseinrichtung wird hier vorgeschlagen, zumindest die folgenden Schritte durchzuführen, nämlich eine Kombination aus Schritt a. und Zusatzschritt a'., Schritt b. und Zusatzschritt b'. sowie Schritt c. und Zusatzschritt c'.:

a. Definieren einer einzigen ersten Winkelposition des ersten Messmagneten pro voller Umdrehung der Antriebsspindel als Gangwechsel und Durchfahren der einzelnen Gewindegänge der Antriebsspindel,
b. bei jedem Gangwechsel Erfassen des zweiten Winkelmesssignals;
c. Speichern des zweiten Winkelmesssignals als Kalibrierungswert zugeordnet zu einem jeweilig anliegenden Gangwechsel,

wobei insbesondere eine translatorische Absolutwegposition der Spindelmutter auf Basis des eindeutig bestimmten vorliegenden Gewindegangs mithilfe des mechanischen Zusammenhangs zwischen dem jeweiligen Gewindegang und der translatorischen Absolutwegposition der Spindelmutter bestimmt wird.

Die Gewindegänge beziehungsweise Gangwechsel der Antriebsspindel werden durch Verfahren der Spindelmutter einzeln durchgegangen, und zwar am einfachsten von der Anfangsstellung bis zur Endstellung und/oder umgekehrt. Hierbei wird das jeweils bei einem Gangwechsel erfasste zweite Winkelmesssignal (überlagert vom ersten Magnetfeld) festgestellt und der zugehörige Kalibrierungswert gespeichert. Es wird also eine Tabelle erstellt, die für jeden einzelnen Gewindegang beziehungsweise Gangwechsel einen Kalibrierungswert für das zweite Winkelmesssignal enthält. In einer bevorzugten Ausführungsform werden bei ausreichender Genauigkeit nur für einige der Gewindegänge die jeweils zugehörigen Kalibrierungswerte festgestellt und entsprechend gespeichert.

Bei dem hier vorgeschlagenen Verfahren ergeben sich Kalibrierungswerte, die sich jeweils von den anderen Kalibrierungswerten der anderen Gangwechsel unterscheiden. Somit ist die Absolutwegposition der Spindelmutter aufgrund des mechanischen Zusammenhangs zwischen dem jeweiligen Gewindegang und der translatorischen Absolutwegposition der Spindelmutter jederzeit eindeutig bestimmbar, und zwar zumindest im Zusammenhang mit dem ersten Winkelmesssignal in einer Gangwechselstellung. Zugleich ist mit dem ersten Winkelsensor die Rotorlage der Antriebsspindel wie konventionell bestimmbar und zur exakten Ansteuerung beziehungsweise Kommutierung einer Antriebseinheit für die Antriebsspindel, bevorzugt für einen Elektromotor verwendbar.

Gemäß einer weiteren vorteilhaften Ausführungsform des Verfahrens wird in einem Schritt c. eine Obergrenze und eine Untergrenze eines Abweichungsbereichs vom Kalibrierungswert derart bestimmt und gespeichert, dass ein erstes Winkelmesssignal zusammen mit einem zugehörigen zweiten Winkelmesssignal im Abweichungsbereich des Kalibrierungswerts eine eindeutige Bestimmung des vorliegenden Gewindegangs erlaubt, wobei bevorzugt die Obergrenze und die Untergrenze auf Basis zumindest einer der folgenden Maßnahmen bestimmt wird:

- Bestimmung auf Basis eines mathematischen Zusammenhangs; und
- Bestimmung auf Basis empirischer Messdaten.

Bei diesem Verfahren wird eine Abweichung vom Kalibrierungswert miteinbezogen, indem eine Obergrenze und eine Untergrenze festgelegt wird, indem ein Messwert für einen bestimmten Kalibrierungswert liegen muss, um einen bestimmten Gewindegang zugeordnet zu werden. Die Abweichungsbereiche sind dabei derart ausgelegt, dass sie sich nicht überschneiden, sodass bereits durch die Messung des zweiten Winkelmesssignals die Absolutwegposition der Spindelmutter bestimmbar ist.

Bevorzugt wird die Obergrenze und die Untergrenze auf Basis eines mathematischen Zusammenhangs festgelegt, wodurch sich eine besonders genaue Auslegung der Absolutwegmesseinrichtung ergibt. Gemäß einer anderen bevorzugten Ausführungsform werden die Obergrenze und die Untergrenze auf Basis empirischer Messdaten festgelegt, wodurch sich fertigungsbedingte Abweichungen eines rein mathematischen Zusammenhangs ausgleichen lassen.

Gemäß einem weiteren vorteilhaften Aspekts der Erfindung wird ein Verfahren zum Steuern der Position einer Spindelmutter eines Spindelaktors für eine hydraulische Gebereinheit vorgeschlagen, wobei deren Absolutwegmesseinrichtung mittels einer Ausführungsform des oben beschriebenen Verfahrens kalibriert ist, wobei das Verfahren zumindest die folgenden Schritte aufweist:

i. Anfahren eines benachbarten Gangwechsels;
ii. Erfassen des zweiten Winkelmesssignals;
iii. Bestimmen des Gewindegangs aus den gespeicherten Kalibrierungswerten;
iv. Ausgeben des bestimmten Gewindegangs und dadurch insbesondere Bestimmen der translatorischen Absolutwegposition der Spindelmutter.

Nachdem ein Kalibrieren gemäß der obigen Beschreibung durchgeführt worden ist, kann die Absolutwegposition der Spindelmutter beziehungsweise der konkrete zugehörige Gewindegang zum Steuern leicht (eindeutig) erfasst werden. Hierzu wird das zweite Winkelmesssignal erfasst, zum Beispiel beim Durchschreiten oder Anfahren eines Gangwechsels, welcher mittels des ersten Winkelsensors eindeutig bestimmbar ist, und das zugehörige vorliegende zweite Winkelmesssignal wird mit den gespeicherten Kalibrierungswerten verglichen. Hieraus lässt sich der Gewindegang bereits eindeutig bestimmen.

Gemäß einer weiteren vorteilhaften Ausführungsform des Verfahrens zum Steuern der Position einer Spindelmutter wird nachfolgend einer eindeutigen Bestimmung eines Gewindegangs nur die Lage des ersten Messmagneten erfasst und die Absolutwegposition der Spindelmutter damit inkrementell ermittelt, wobei nach einem Speicherverlust der Absolutwegposition, und bevorzugt nach einem vorbestimmten Zeitabstand, die Absolutwegposition der Spindelmutter mithilfe des oben beschriebenen Verfahrens zum Steuern mittels Erfassen des zweiten Messmagneten ermittelt wird.

Bei einer solchen Ausführung wird der Speicheraufwand beziehungsweise der Ausleseaufwand und damit der Energiebedarf deutlich reduziert. Auch ist dabei die Auslesegeschwindigkeit erhöhbar und somit die Stellgeschwindigkeit der Antriebsspindel steigerbar.

Gemäß einem weiteren Aspekt der Erfindung wird ein Spindelaktor für eine hydraulische Gebereinheit vorgeschlagen, welcher zumindest die folgenden Komponenten aufweist:

- eine Antriebsspindel, welche abtriebsseitig eine Mehrzahl von Gewindegängen mit einer definierten Gewindesteigung aufweist, zum translatorischen Bewegen einer Spindelmutter, wobei die Antriebsspindel einen ersten Messmagneten an einer ersten Winkelposition der Antriebsspindel aufweist, und wobei die Spindelmutter zwischen einer Anfangsstellung und einer Endstellung einen vorbestimmten maximalen Verfahrweg aufweist;
- eine Messwelle mit einem zweiten Messmagneten an einer zweiten Winkelposition der Messwelle, wobei die Messwelle in fester Übersetzung mit der Antriebsspindel von der Antriebsspindel antreibbar ist, wobei die Übersetzung zur Messwelle derart eingerichtet ist, dass die Periodizität der Messwelle einer vollen Umdrehung der Antriebsspindel multipliziert mit der Summe aus einer beliebigen ersten Ganzzahl (m) und aus dem Kehrwert einer zweiten Ganzzahl (N) entspricht, wobei die zweite Ganzzahl (N) betragsmäßig größer als die Anzahl (G) der Gewindegänge der Antriebsspindel ist;
- einen ersten Winkelsensor zum Erfassen eines ersten Winkelmesssignals vom ersten Messmagneten mit einem ersten Magnetfeld; und
- einen zweiten Winkelsensor zum Erfassen eines zweiten Winkelmesssignals vom zweiten Messmagneten mit einem zweiten Magnetfeld, wobei der zweite Messmagnet maximal einen derart vernachlässigbaren Einfluss auf das erste Winkelmesssignal ausübt, dass das erste Winkelmesssignal eindeutig ist, und der erste Messmagnet das zweite Winkelmesssignal derart beeinflusst, dass das zweite Winkelmesssignal uneindeutig ist.

Der hier vorgeschlagene Spindelaktor ist zur Ausführung eines Verfahrens gemäß der obigen Beschreibung eingerichtet, sodass die absolute Lage der Spindelmutter hinreichend genau bestimmbar ist, ohne dass hierzu ein translatorischer Absolutwegsensor oder ein Referenzanschlag oder ein Referenzsensor notwendig sind. Der erste Messmagnet muss nicht direkt mit der Antriebsspindel verbunden sein, sondern ist bevorzugt mit einem rotatorisch zur Antriebswelle fixierten und (technisch) spielfreien Fortsatz verbunden. Zu weiteren Details der Vorrichtung wird hier auf die detaillierte Erläuterung der Vorrichtung im Bezug auf das oben aufgezeigte Verfahren verwiesen.

Gemäß einer weiteren vorteilhaften Ausführungsform des Spindelaktors liegt der erste Messmagnet in jeder relativen Lage zum zweiten Messmagneten maximal 10 mm, bevorzugt maximal 8 mm, entfernt und der erste Messmagnet weist eine größere, bevorzugt eine mindestens 2,5-fache, erste Magnetflussdichte im Vergleich zur zweiten Magnetflussdichte des zweiten Messmagneten auf.

Aufgrund der nur geringen Beabstandung der Messmagneten und aufgrund der deutlich unterschiedlichen Auslegung der Magnetflussdichten ist eine besonders kleine Bauweise der Absolutwegmesseinrichtung an dem Spindelaktor möglich. Die erste Magnetflussdichte beträgt bevorzugt mindestens das 1,5-fache, besonders bevorzugt mindestens das 2,5-fache der zweiten Magnetflussdichte. Insbesondere muss kein räumlich getrennter Absolutwegsensor vorgesehen werden und die Absolutwegmesseinrichtung ist mittels einer zusammenhängenden (separaten) Bauelektronik mit dem Spindelaktor verbindbar.

Gemäß einer weiteren vorteilhaften Ausführungsform des Spindelaktors sind der erste Messmagnet und die Messwelle mit dem zweiten Messmagnet von der Abtriebsseite der Antriebsspindel gesehen hinter der Antriebseinheit endseitig angeordnet.

Durch die endseitige Anbringung der Messvorrichtung ist eine einfach zugängliche und einfach zu montierende Bauweise erreicht. Besonders bevorzugt ist die Messwelle lediglich als Zahnrad beziehungsweise als Zahnkranz ausgebildet und weist lediglich eine ausreichende mechanische Stabilität und rotatorische Aufhängung zur Sicherstellung der exakten Lage des zweiten Messmagnets auf. Besonders bevorzugt ist die Messwelle mittels eines Planetengetriebes mit der Antriebsspindel übersetzungsfest verbunden.

Gemäß einem weiteren vorteilhaften Aspekt der Erfindung wird eine hydraulische Gebereinheit für eine Reibkupplung vorgeschlagen, welche zumindest die folgenden Komponenten aufweist:
einen Spindelaktor nach einer Ausführungsform gemäß der obigen Beschreibung,

- eine elektrische Antriebseinheit zum gesteuerten Rotieren der Antriebsspindel;
- einen Geberkolben, welcher mit der Spindelmutter zur translatorischen Bewegung fest verbindbar ist; und
- einen Geberzylinder zur Aufnahme des Geberkolbens und einer hydraulischen Flüssigkeit, wobei der Geberzylinder mittels der hydraulischen Flüssigkeit kommunizierend mit einem Nehmerzylinder verbindbar ist.

Die Antriebsspindel des Spindelaktors ist hierbei über eine elektrische Antriebseinheit rotierbar, zum Beispiel ein Servo-Motor, und die elektrische Antriebseinheit wird mittels der Messung gemäß der obigen Beschreibung gesteuert. Die Spindelmutter ist dabei fest mit einem Geberkolben verbunden, beziehungsweise die Spindelmutter ist einstückig mit einem Geberkolben gebildet, und führt eine translatorische Bewegung aus, indem die Antriebsspindel mittels der Gewindesteigung der Gewindegänge die rotatorisch fixierte Spindelmutter axial verschiebt. Somit ist eine hydraulische Flüssigkeit in dem Geberzylinder mittels des Geberkolbens verdrängbar beziehungsweise ansaugbar, sodass ein hiermit kommunizierend verbundener Nehmerzylinder steuerbar ist und eine Kraft vom Geberzylinder auf den Nehmerzylinder übertragbar ist. Ganz besonders bevorzugt ist hiermit eine schnelle und exakte Betätigung des Geberkolbens möglich. Zudem sind hohe Kräfte, die zum Beispiel zum Anpressen einer Reibkupplung notwendig sind, erzeugbar.

Gemäß einem weiteren Aspekt der Erfindung wird eine Reibkupplung mit einer Rotationsachse zum lösbaren Verbinden einer Antriebswelle mit einem Verbraucher vorgeschlagen, welcher zumindest die folgenden Komponenten aufweist:

- zumindest ein Reibpaket mit zumindest einer Reibplatte nach einem der vorhergehenden Ansprüche und zumindest einer korrespondierenden Reibscheibe, über welches im angepressten Zustand ein Drehmoment übertragbar ist
- zumindest eine Betätigungseinrichtung mit einem Nehmerzylinder zum Verpressen des zumindest einen Reibpakets; und
- zumindest eine kommunizierend verbindbare hydraulische Gebereinheit gemäß obiger Beschreibung.

Die Reibkupplung ist dazu eingerichtet, ein Drehmoment lösbar von einer Abtriebswelle auf einen Verbraucher und umgekehrt zu übertragen. Dies wird in der Regel über das zumindest eine Reibpaket erreicht, welches eine axial verschiebbare, in der Regel mit der Abtriebswelle rotationsfeste, Anpressplatte aufweist, die gegen zumindest eine korrespondierende Reibscheibe pressbar ist. Infolge der Anpresskraft ergibt sich eine Reibkraft über die Reibfläche, die multipliziert mit dem mittleren Radius der Reibfläche ein übertragbares Drehmoment ergibt. Damit ein möglichst präziser Anpressvorgang möglich ist, bei dem vor allem schnell und verschleißarm gekuppelt werden kann, ist die oben beschriebene Gebereinheit besonders vorteilhaft. Damit ist in jeder Situation die die Absolutwegposition des Geberkolbens bestimmbar und zugleich sehr genau einstellbar. Ganz besonders vorteilhaft ist der Aufbau dabei raumsparend, einfach montierbar und verbraucht wenig Energie zum Auslesen. Gemäß einem weiteren Aspekt der Erfindung wird ein Antriebsstrang vorgeschlagen, welcher eine Antriebseinheit mit einer Abtriebswelle und eine Reibkupplung gemäß der obigen Beschreibung umfasst, wobei die Abtriebswelle zur Drehmomentübertragung mittels der Reibkupplung mit zumindest einem Verbraucher lösbar verbindbar ist.

Der Antriebsstrang ist dazu eingerichtet, ein von einer Antriebseinheit, zum Beispiel einer Energiewandlungsmaschine, bevorzugt einer Verbrennungskraftmaschine oder einem Elektromotor, bereitgestelltes und über ihre Abtriebswelle abgegebenes Drehmoment für zumindest einen Verbraucher lösbar, also zuschaltbar und abschaltbar, zu übertragen. Ein beispielhafter Verbraucher ist zumindest ein Antriebsrad eines Kraftfahrzeugs und/oder ein elektrischer Generator zur Bereitstellung von elektrischer Energie. Um das Drehmoment gezielt und/oder mittels eines Schaltgetriebes mit unterschiedlichen Übersetzungen zu übertragen beziehungsweise eine Übertragung zu trennen, ist die Verwendung der oben beschriebenen Reibkupplung besonders vorteilhaft, weil ein hohes Drehmoment präzise und verschleißarm realisierbar ist, wobei zugleich die Dauer bis zur Bestimmung der Absolutwegposition des Geberkolbens gegenüber vergleichbar einfachen aufgebauten Absolutwegmesseinrichtungen deutlich beschleunigt ist.

Umgekehrt ist auch eine Aufnahme einer von zum Beispiel einem Antriebsrad eingebrachte Trägheitsenergie umsetzbar. Das zumindest eine Antriebsrad bildet dann die Antriebseinheit, wobei dessen Trägheitsenergie mittels der Doppelkupplung auf einen elektrischen Generator zur Rekuperation, also zur elektrischen Speicherung der Bremsenergie, mit einem entsprechend eingerichteten Antriebsstrang übertragbar ist. Weiterhin sind in einer bevorzugten Ausführungsform eine Mehrzahl von Antriebseinheiten vorgesehen, die mittels der Reibkupplung in Reihe oder parallel geschaltet beziehungsweise voneinander entkoppelt betreibbar sind, beziehungsweise deren Drehmoment jeweils lösbar zur Nutzung zur Verfügung stellbar ist. Beispiele sind Hybridantriebe aus Elektromotor und Verbrennungskraftmaschine, aber auch Mehrzylindermotoren, bei denen einzelne Zylinder (-gruppen) zuschaltbar sind.

Gemäß einem weiteren Aspekt der Erfindung wird ein Kraftfahrzeug vorgeschlagen, welches zumindest ein Antriebsrad aufweist, welches mittels eines Antriebsstrangs gemäß der obigen Beschreibung antreibbar ist.

Die meisten Kraftfahrzeuge weisen heutzutage einen Frontantrieb auf und ordnen daher bevorzugt die Antriebseinheit, beispielsweise eine Verbrennungskraftmaschine oder einen Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden. Ähnlich gestaltet sich der Einsatz einer Reibkupplung in motorisierten Zweirädern, für welche eine deutlich gesteigerte Leistung bei gleichbleibendem Bauraum gefordert wird.

Verschärft wird diese Problematik bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Der oben beschriebene Antriebsstrang weist eine hydraulische Gebereinheit besonders geringer Baugröße auf, die zugleich den erhöhten Anforderungen an übertragbaren Drehmomenten bei gleichbleibender oder sogar verlängerter Lebensdauer der Reibbeläge nachkommt.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beziehungsweise der Klasse City Car. Beispiele der Kleinstwagenklasse sind ein Volkswagen up! oder ein Renault Twingo. Beispiele der Kleinwagenklasse sind ein Alfa Romeo Mito, Volkswagen Polo, Ford Fiesta oder Renault Clio.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in

Fig. 1:     ein Spindelaktor mit inkrementeller Wegmessung;
Fig. 2:     ein Spindelaktor mit Absolutwegsensor;
Fig. 3:     ein Spindelaktor mit Absolutwegmesseinrichtung mittels zweier Winkelmesssensoren;
Fig. 4:     eine beispielhafte Messfehlerkurve eines zweiten Winkelmesssensors;
Fig. 5:     ein Ausschnitt der in Fig. 4 gezeigten Messfehlerkurve;
Fig. 6:     eine schematische Darstellung des ersten Winkelverlaufs einer Antriebsspindel im Vergleich zu zwei verschiedenen zweiten Winkelverläufen einer Messwelle;
Fig. 7:     einen Graph mit möglichen Messwerten des zweiten Winkelmesssignals;
Fig. 8:     eine hydraulische Gebereinheit im Schnitt;
Fig. 9:     eine hydraulische Gebereinheit in räumlicher Rückansicht;
Fig. 10:    eine Reibkupplung mit Gebereinheit;
Fig. 11:    eine schematische Darstellung des Kalibrierverfahrens; und
Fig. 12:    eine schematische Darstellung des Steuerverfahrens.

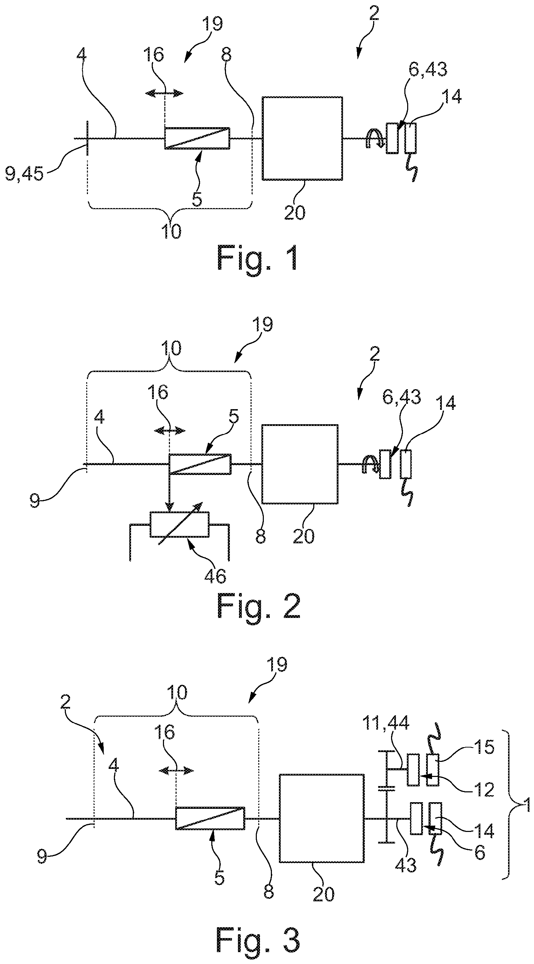

In Fig. 1 wird ein Spindelaktor 2 schematisch dargestellt, bei welchem eine Antriebsspindel 4 mittels einer Antriebseinheit 20 rotierbar ist, sodass eine rotationsfeste Spindelmutter 5 entlang des maximalen Verfahrwegs 10 von einer Anfangsstellung 8 in eine Endstellung 9 verfahrbar ist. Die Spindelmutter 5 befindet sich dabei abtriebsseitig der Antriebseinheit 20. Auf der der Abtriebsseite 19 abgekehrten Seite des Spindelaktors 2 ist ein (erster) Rotor 43 vorgesehen, an dem ein erster Messmagnet 6 angeordnet ist und dessen Winkellage mittels eines ersten Winkelsensors 14 erfassbar ist. Mittels inkrementeller Aufnahme der Anzahl der Durchgänge, also der Gangwechsel, wird die Position der Spindelmutter 5 bestimmt, wobei nur durch ein Anfahren des hier vorgesehenen Kalibrieranschlags 45 bei der Endstellung 9 die Position in eine translatorische Absolutwegposition 16 umrechenbar ist.

In Fig. 2 ist ein Spindelaktor 2 mit einer anderen Konfiguration zur Erfassung der translatorischen Absolutwegposition 16 der Spindelmutter 5 gezeigt. Hierbei erfasst ein Absolutwegsensor 46 die Absolutwegposition 16 der Spindelmutter 5 direkt. Weil die Antriebseinheit 20 aber mit einem Winkelmesssignal versorgt werden muss, ist hier weiterhin ein (erster) Rotor 43 mit einem ersten Messmagneten 6 wie in der Konfiguration in Fig. 1 vorgesehen.

In Fig. 3 ist ein Spindelaktor 2 gezeigt, bei dem an dem der Abtriebsseite 19 gegenüberliegenden Ende der Antriebsspindel 4 eine Absolutwegmesseinrichtung 1 gebildet ist. Diese umfasst einen ersten Rotor 43, welcher einen ersten Messmagneten 6 aufweist und dessen Winkellage mittels des ersten Winkelsensors 14 erfassbar ist. Weiterhin ist übersetzungsfest verbunden ein zweiter Rotor 44, beziehungsweise eine Messwelle 11 vorgesehen, an der ein zweiter Messmagnet 12 vorgesehen ist, welcher mittels eines zweiten Winkelsensors 15 erfassbar ist. Bei einer bevorzugten Ausführungsform sind die Messmagnete 6 und 12 so nah beieinander angeordnet, dass sich die Magnetfelder (teilweise) überschneiden. Dabei hat das Magnetfeld des zweiten Messmagnets 12 auf die Messung der Winkellage des ersten Messmagneten 6 mittels des ersten Winkelsensors 14 einen vernachlässigbaren Einfluss. Bei diesem Aufbau ist wie oben in der Beschreibung aufgezeigt, eine Absolutwegposition 16 der Spindelmutter 5 eindeutig bestimmbar.

In Fig. 4 ist eine Messfehlerkurve 49 bei einem beeinflussten zweiten Winkelmesssignal des zweiten Winkelsensors 15, über einer Gangachse 47 (die Zahlen bezeichnen einzelne Gewindegänge an Ihren jeweiligen Gangwechseln) und einer Winkelfehlerachse 48, dargestellt. Hierbei ist klar zu erkennen, dass sich die Messfehler in nicht-linearer Weise überschneiden und somit ein nur mehrdeutiges Signal erzeugen.

In Fig. 5 ist ein in Fig. 4 bezeichneter Messausschnitt 50 der Messfehlerkurve 49 aus Fig. 4 gezeigt, wobei hier die Mehrdeutigkeit bereits in diesem kleinen Bereich einer einzigen ganzen Umdrehung der Antriebsspindel deutlich wird.

In Fig. 6 ist schematisch ein erster Winkelverlauf 53 (durchgehende Kurve) einer Antriebsspindel mit hier sechs Gewindegängen dargestellt, wobei die Gangwechsel 57 bis 62 hier nach jeweils einer vollen Umdrehung, also $2\pi x$, festgelegt ist. Es sind drei Konfigurationen der Übersetzung zur Messwelle dargestellt, wobei der Modulor $m$ bei dem zweiten Winkelverlauf der Messwelle mit der ersten Übersetzung 54 (lang gestrichelte Kurve) eins ist, bei dem zweiten Winkelverlauf der Messwelle mit der zweiten Übersetzung 55 (kurz gestrichelte Kurve) zwei ist und bei dem zweiten Winkelverlauf der Messwelle mit der dritten Übersetzung 56 (doppelpunkt-gestrichelte Kurve) null ist. Zwischen dem Startpunkt und dem Endpunkt ist bei keiner der dargestellten zweiten Winkelverläufe 54, 55 und 56 die Konstellation, also die Winkelpositionen der Messwelle zur Antriebswelle, identisch. Infolge der Reduzierung der Messpunkte auf die Gangwechsel 57 bis 62 werden die Abstände zwischen den zu messenden zweiten Winkelmesssignalen so groß, dass die Uneindeutigkeit des zweiten Winkelmesssignals ausgeglichen wird.

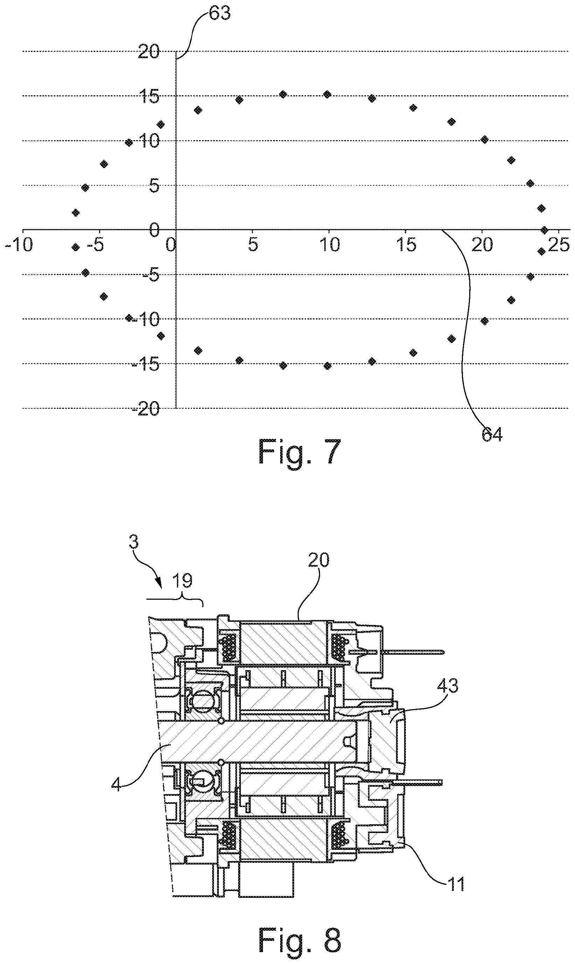

In Fig. 7 ist eine beispielhafte Auslesetabelle eines beeinflussten zweiten Winkelmesssignals von einem vollständigen Verfahrweg einer Spindelmutter 5 gezeigt über den Koordinatenachsen y-Achse 63 und x-Achse 64. Zum Referenzieren auf den richtigen Kalibrierungswert wird beim Auslesen ein solcher Messpunkt mit den x-Koordinaten und den y-Koordinaten der Abstand zu den Kalibrierungswerten berechnet. Der Kalibrierungswert mit dem geringsten errechneten Abstand ist dann der derjenige, der den vorliegenden Gewindegang bestimmt. Im Folgenden ist dazu beispielhaft eine Tabelle und die Berechnung des Abstands dargestellt:

| Bx2 | By2 | Gang | Abstand |
|-------|-------|------|---------|
| Bx20 | By20 | 0 | a0 |
| Bx21 | By21 | 1 | a1 |
| ... | ... | ... | ... |
| Bx2i | By2i | j | ai |
| ... | ... | ... | ... |
| Bx231 | By231 | 31 | a31 |

Bx2i sind die gespeicherten x-Werte und By2i sind die gespeicherten y-Werte des zweiten Winkelmesssignals, die jeweils einem Gewindegang (beziehungsweise Gang) zugeordnet sind. Nun wird die Antriebsspindel zum Beispiel in die Winkelstellung 0° (also in eine Gangwechselposition) überführt und der vorliegende x-Wert Bx2 und y-Wert By2 des zweiten Winkelmesssignals erfasst. Anschließend wird der Abstand (ai), zum Beispiel wie folgt, berechnet:

$$a_i = \sqrt{(B_{x2} - B_{x2i})^2 + \left(B_{y2} - B_{y2i}\right)^2}$$

Der kleinste Abstand ai ergibt dann den anliegenden Gewindegang und erlaubt so die Bestimmung der Absolutwegposition der Spindelmutter.

In Fig. 8 ist ein konkretes Ausführungsbeispiel einer hydraulischen Gebereinheit 3 im Schnitt gezeigt, wobei die Antriebsspindel 4 mit einem ersten Rotor 43 verbunden ist, welcher in fester Verbindung mit einer Messwelle 11 steht. Der erste Rotor 43 und die Messwelle 11 sind dabei, gesehen von der Abtriebsseite 19, rückseitig der Antriebseinheit 20 angeordnet.

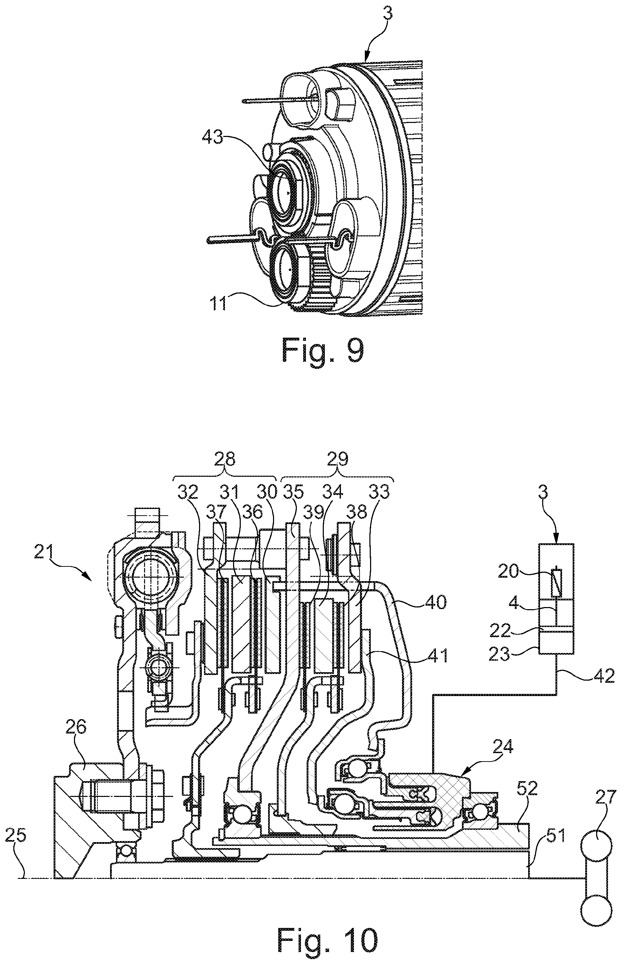

In Fig. 9 ist die gleiche hydraulische Gebereinheit räumlich in einem ähnlichen Ausschnitt wie in Fig. 8 von außen gezeigt, wobei hier die Zahnradverbindung zur übersetzungsfesten Verbindung zwischen dem ersten Rotor 43 und der Messwelle 11 gut erkennbar ist.

In Fig. 10 ist beispielhaft eine Reibkupplung 23 als (trockene) Doppelkupplung dargestellt, welche mittels eines Nehmerzylinders 24 und jeweils einem ersten Betätigungstopf 40 und einem zweiten Betätigungstopf 41 ein über die Abtriebswelle 26 eingegebenes Drehmoment über das erste Reibpaket 28 auf die erste Ausgangswelle 51 und über das zweite Reibpaket 29 auf die zweite Ausgangswelle 52 abgibt. Das erste Reibpaket 28 setzt sich dabei aus einer ersten Reibplatte 30 (Anpressplatte), einer zweiten Reibplatte 31 (Zwischenplatte), einer dritten Reibplatte 32 (Gegenplatte) und einer ersten Reibscheibe 36 sowie einer zweiten Reibscheibe 37, für welche auch Reiblamellen verwendbar sind, zusammen. Das zweite Reibpaket 22 setzt sich in ähnlicher Bauweise aus einer ersten Reibplatte 33 (Anpressplatte), einer zweiten Reibplatte 34 (Zwischenplatte), einer dritten Reibplatte 35 (Gegenplatte) und einer ersten Reibscheibe 38 sowie einer zweiten Reibscheibe 39, für welche auch Reiblamellen verwendbar sind, zusammen. Die Reibpakete 28 und 29 sind über eine hydraulische Gebereinheit 3 mittels einer Hydraulikleitung 42 automatisiert betätigbar. Hierzu ist der Hydraulikkolben 22 im hydraulischen Zylinder 23 mittels einer Spindel 4 hin und her bewegbar, sodass eine hydraulische Flüssigkeit in der hydraulischen Gebereinheit 3 verdrängt und in den Nehmerzylinder 24 eingepresst wird.

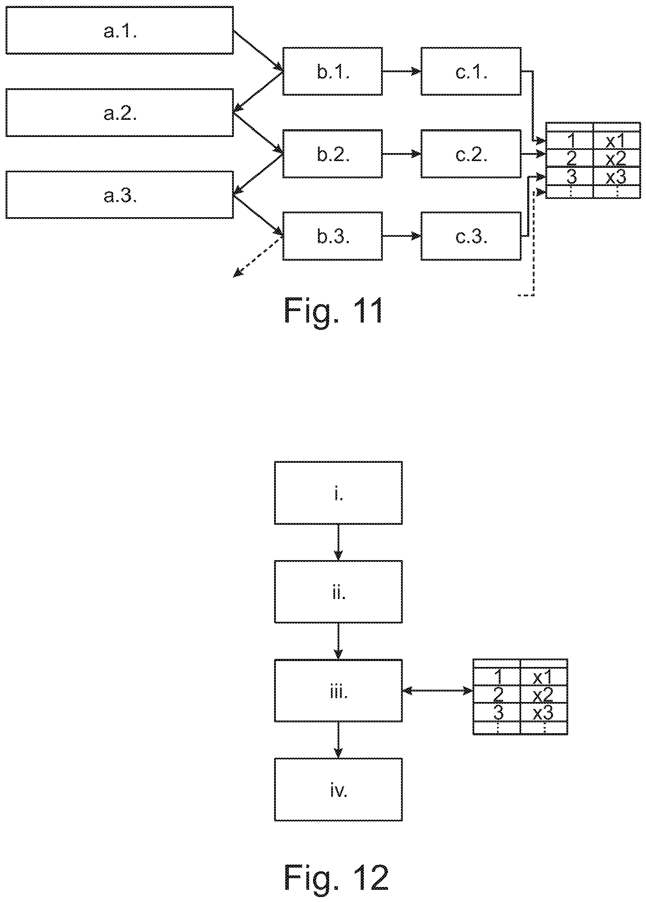

In Fig. 11 ist schematisch ein Kalibrierungsverfahren mit uneindeutigen zweiten Winkelmesssignalen gemäß der obigen Beschreibung gezeigt, wobei in einem Schritt (a.1.) ein erster Gewindegang der Antriebsspindel angefahren und dazu in einem Schritt (b.1.) das vorliegende Winkelmesssignal der Messwelle 11 erfasst wird. Zusätzlich wird hier in einem Schritt (c.1.) eine Abweichung (obere und untere Toleranzgrenze) berechnet oder empirisch ermittelt zugewiesen und anschließend in einer Messwerttabelle gespeichert. Daraufhin wird im weiteren Schritt (a.2.) der zweite Gewindegang angefahren und das Verfahren wiederholt bis alle Gewindegänge der Antriebsspindel durchfahren worden sind. Hierbei können auch Zwischengänge erfasst werden oder einige Gewindegänge ausgelassen werden. Beispielhaft ist im Folgenden eine Messwerttabelle gezeigt, wobei RLS1 das erste Winkelmesssignal des ersten Winkelsensors, RLS2 das zweite Winkelmesssignal des zweiten Winkelsensors und Gang den Gewindegang jeweils bei einer vollen Umdrehung der Antriebswelle bezeichnet:

| Kalibrierungswertauf RLS2 | Untere Toleranzgrenze | Obere Toleranzgrenze | Gang |
|---|---|---|---|
| $X_0$ | $X_0-X_{01}$ | $X_0+X_{01}$ | 0 |
| $X_1$ | $X_1-X_{11}$ | $X_1+X_{11}$ | 1 |
| $X_2$ | $X_2-X_{21}$ | $X_2+X_{21}$ | 2 |
| ... | ... | ... | ... |
| ... | ... | ... | ... |
| $X_n$ | $X_{n-1}-x_{n-11}$ | $X_{n-1}+X_{n-11}$ | n-1 |

In Fig. 12 ist ein Steuerverfahren basierend auf einer wie zum Beispiel in Fig. 11 dargestellt erzeugten Messwerttabelle dargestellt. Zunächst wird in Schritt (i.) ein Gangwechsel angefahren, in einem Schritt (ii.) die Winkellage der Messwelle erfasst und anschließend in einem Schritt (iii.) wird der erfasste Wert mit der wie in Fig. 11 erstellten Tabelle verglichen und mögliche Werte ermittelt. Anschließend wird in Schritt (iv.) der Gewindegang ausgegeben und anschließend die Absolutwegposition der Spindelmutter inkrementell errechnet.

Die Erfindung betrifft also ein Verfahren zum Kalibrieren einer Absolutwegmesseinrichtung eines Spindelaktors für eine hydraulische Gebereinheit, wobei der Spindelaktor zwei Messmagneten aufweist, wobei der zweite Messmagnet maximal einen derart vernachlässigbaren Einfluss auf das erste Winkelmesssignal ausübt, dass ein erstes Winkelmesssignal eindeutig ist, und wobei der erste Messmagnet das zweite Winkelmesssignal derart beeinflusst, dass ein zweite Winkelmesssignal uneindeutig ist,

wobei das Verfahren zumindest die folgenden Schritte aufweist:

a. Definieren einer einzigen ersten Winkelposition des ersten Messmagneten pro voller Umdrehung der Antriebsspindel als Gangwechsel,

b. Erfassen des zweiten Winkelmesssignals bei zumindest einem anliegenden Gangwechsel;

c. Speichern des zweiten Winkelmesssignals als Kalibrierungswert zugeordnet zu dem zumindest einen anliegenden Gangwechsel,

wobei insbesondere eine translatorische Absolutwegposition der Spindelmutter auf Basis des eindeutig bestimmten vorliegenden Gewindegangs mithilfe des mechanischen Zusammenhangs zwischen dem jeweiligen Gewindegang und der translatorischen Absolutwegposition der Spindelmutter bestimmt wird.

Mit dem hier vorgeschlagenen Verfahren und Vorrichtung ist es möglich, ohne aufwendigen Absolutwegsensor eine Absolutwegposition festzustellen.

**Bezugszeichenliste**

1       Absolutwegmesseinrichtung
2       Spindelaktor
3       hydraulische Gebereinheit
4       Antriebsspindel
5       Spindelmutter
6       erster Messmagnet
7       erste Winkelposition
8       Anfangsstellung
9       Endstellung
10      maximaler Verfahrweg
11      Messwelle
12      zweiter Messmagnet
13      zweite Winkelposition
14      erster Winkelsensor

15 zweiter Winkelsensor
16 translatorische Absolutwegposition
17 weiterer erster Messmagnet
18 weiterer zweiter Messmagnet
19 Abtriebsseite
20 Antriebseinheit
21 Reibkupplung
22 Geberkolben
23 Geberzylinder
24 Nehmerzylinder
25 Rotationsachse
26 Abtriebswelle
27 Verbraucher
28 erstes Reibpaket
29 zweites Reibpaket
30 erste Reibplatte des ersten Reibpakets
31 zweite Reibplatte des ersten Reibpakets
32 dritte Reibplatte des ersten Reibpakets
33 erste Reibplatte des zweiten Reibpakets
34 zweite Reibplatte des zweiten Reibpakets
35 dritte Reibplatte des zweiten Reibpakets
36 erste Reibscheibe des ersten Reibpakets
37 zweite Reibscheibe des ersten Reibpakets
38 erste Reibscheibe des zweiten Reibpakets
39 zweite Reibscheibe des zweiten Reibpakets
40 erste Betätigungseinrichtung
41 zweite Betätigungseinrichtung
42 Hydraulikleitung
43 erster Rotor
44 zweiter Rotor
45 Kalibrieranschlag
46 Absolutwegsensor
47 Gangachse
48 Winkelfehlerachse
49 Messfehlerkurve
50 Messausschnitt
51 erste Getriebewelle
52 zweite Getriebewelle
53 erster Winkelverlauf der Antriebsspindel
54 zweiter Winkelverlauf der Messwelle mit erster Übersetzung
55 zweiter Winkelverlauf der Messwelle mit zweiter Übersetzung
56 zweiter Winkelverlauf der Messwelle mit dritter Übersetzung
57 erster Gewindegang
58 zweiter Gewindegang
59 dritter Gewindegang
60 vierter Gewindegang
61 fünfter Gewindegang
62 sechster Gewindegang
63 y-Achse
64 x-Achse

**Patentansprüche**

1. Verfahren zum Kalibrieren einer Absolutwegmesseinrichtung (1) eines Spindelaktors (2) für eine hydraulische Gebereinheit (3), wobei der Spindelaktor (2) zumindest die folgenden Komponenten aufweist:

   - eine Antriebsspindel (4), welche eine Mehrzahl von Gewindegängen mit einer definierten Gewindesteigung

11

aufweist, zum translatorischen Bewegen einer Spindelmutter (5), wobei die Antriebsspindel (4) einen ersten Messmagneten (6) an einer ersten Winkelposition (7) der Antriebsspindel (4) aufweist, und wobei die Spindelmutter (5) zwischen einer Anfangsstellung (8) und einer Endstellung (9) einen vorbestimmten maximalen Verfahrweg (10) aufweist;

- eine Messwelle (11) mit einem zweiten Messmagneten (12) an einer zweiten Winkelposition (13) der Messwelle (11), wobei die Messwelle (11) in fester Übersetzung mit der Antriebsspindel (4) von der Antriebsspindel (4) antreibbar ist, wobei die Übersetzung zur Messwelle (11) derart eingerichtet ist, dass die Periodizität der Messwelle (11) einer vollen Umdrehung der Antriebsspindel (4) multipliziert mit der Summe aus einer beliebigen ersten Ganzzahl (m) und aus dem Kehrwert einer zweiten Ganzzahl (N) entspricht, wobei die zweite Ganzzahl (N) betragsmäßig größer als die Anzahl (G) der Gewindegänge der Antriebsspindel (4) ist;

- einen ersten Winkelsensor (14) zur Erfassung eines ersten Winkelmesssignals vom ersten Messmagneten (6) mit einem ersten Magnetfeld; und

- einen zweiten Winkelsensor (15) zur Erfassung eines zweiten Winkelmesssignals vom zweiten Messmagneten (12) mit einem zweiten Magnetfeld,

wobei das Verfahren zumindest die folgenden Schritte aufweist:

a. Definieren einer einzigen ersten Winkelposition des ersten Messmagneten pro voller Umdrehung der Antriebsspindel (4) als Gangwechsel,

b. Erfassen des zweiten Winkelmesssignals bei zumindest einem anliegenden Gangwechsel;

c. Speichern des zweiten Winkelmesssignals als Kalibrierungswert zugeordnet zu dem zumindest einen anliegenden Gangwechsel,

wobei insbesondere eine translatorische Absolutwegposition (16) der Spindelmutter (5) auf Basis des eindeutig bestimmten vorliegenden Gewindegangs mithilfe des mechanischen Zusammenhangs zwischen dem jeweiligen Gewindegang und der translatorischen Absolutwegposition (16) der Spindelmutter (5) bestimmt wird, **dadurch gekennzeichnet, dass** der zweite Messmagnet (12) maximal einen derart vernachlässigbaren Einfluss auf das erste Winkelmesssignal ausübt, dass das erste Winkelmesssignal eindeutig ist, und wobei der erste Messmagnet (6) das zweite Winkelmesssignal derart beeinflusst, dass das zweite Winkelmesssignal uneindeutig ist, wobei zusätzlich zumindest folgende Schritte ausgeführt werden:

a'. Durchfahren der einzelnen Gewindegänge der Antriebsspindel,

b'. bei jedem Gangwechsel Erfassen des zweiten Winkelmesssignals;

c'. Speichern des zweiten Winkelmesssignals als Kalibrierungswert zugeordnet zu dem jeweilig anliegenden Gangwechsel.

2. Verfahren zum Kalibrieren nach Anspruch 1, wobei in einem Schritt c. eine Obergrenze und eine Untergrenze eines Abweichungsbereichs vom Kalibrierungswert derart bestimmt und gespeichert wird, dass ein erstes Winkelmesssignal zusammen mit einem zugehörigen zweiten Winkelmesssignal im Abweichungsbereich des Kalibrierungswerts eine eindeutige Bestimmung des vorliegenden Gewindegangs erlaubt,

wobei bevorzugt die Obergrenze und die Untergrenze auf Basis zumindest einer der folgenden Maßnahmen bestimmt wird:

- Bestimmung auf Basis eines mathematischen Zusammenhangs;

- Bestimmung auf Basis empirischer Messdaten;

- Bestimmung auf Basis eines wiederholten Kalibrierungsvorgangs gemäß Anspruch 1.

3. Verfahren zum Steuern der Position einer Spindelmutter (5) eines Spindelaktors (2) für eine hydraulische Gebereinheit (3) mit einer Absolutwegmesseinrichtung (1), welche nach einem Verfahren zum Kalibrieren gemäß einem der vorhergehenden Ansprüche kalibriert ist, aufweisend zumindest die folgenden Schritte:

i. Anfahren eines benachbarten Gangwechsels;

ii. Erfassen des zweiten Winkelmesssignals;

iii. Bestimmen des Gewindegangs aus den gespeicherten Kalibrierungswerten;

iv. Ausgeben des bestimmten Gewindegangs und dadurch insbesondere Bestimmen der translatorischen Absolutwegposition (16) der Spindelmutter (5).

4. Verfahren zum Steuern nach Anspruch 3, wobei nachfolgend einer eindeutigen Bestimmung eines Gewindegangs nur die Lage des ersten Messmagneten (6) erfasst wird und die Absolutwegposition der Spindelmutter (5) damit inkrementell ermittelt wird, wobei nach einem Speicherverlust der Absolutwegposition, und bevorzugt nach einem vorbestimmten Zeitabstand, die Absolutwegposition der Spindelmutter (5) mithilfe des Verfahrens zum Steuern nach Anspruch 4 mittels Erfassens des zweiten Winkelmesssignals ermittelt wird.

5. Spindelaktor (2) für eine hydraulische Gebereinheit (3), aufweisend zumindest die folgenden Komponenten:

- eine Antriebsspindel (4), welche abtriebsseitig eine Mehrzahl von Gewindegängen mit einer definierten Gewindesteigung aufweist, zum translatorischen Bewegen einer Spindelmutter (5), wobei die Antriebsspindel (4) einen ersten Messmagneten (6) an einer ersten Winkelposition (7) der Antriebsspindel (4) aufweist, und wobei die Spindelmutter (5) zwischen einer Anfangsstellung (8) und einer Endstellung (9) einen vorbestimmten maximalen Verfahrweg (10) aufweist;
- eine Messwelle (11) mit einem zweiten Messmagneten (12) an einer zweiten Winkelposition (13) der Messwelle (11), wobei die Messwelle (11) in fester Übersetzung mit der Antriebsspindel (4) von der Antriebsspindel (4) antreibbar ist, wobei die Übersetzung zur Messwelle (11) derart eingerichtet ist, dass die Periodizität der Messwelle (11) einer vollen Umdrehung der Antriebsspindel (4) multipliziert mit der Summe aus einer beliebigen ersten Ganzzahl (m) und aus dem Kehrwert einer zweiten Ganzzahl (N) entspricht, wobei die zweite Ganzzahl (N) betragsmäßig größer als die Anzahl (G) der Gewindegänge der Antriebsspindel (4) ist;
- einen ersten Winkelsensor (14) zum Erfassen eines ersten Winkelmesssignals vom ersten Messmagneten (6) mit einem ersten Magnetfeld; und
- einen zweiten Winkelsensor (14) zum Erfassen eines zweiten Winkelmesssignals vom zweiten Messmagneten (12) mit einem zweiten Magnetfeld, **dadurch gekennzeichnet, dass** der zweite Messmagnet (12) maximal einen derart vernachlässigbaren Einfluss auf das erste Winkelmesssignal ausübt, dass das erste Winkelmesssignal eindeutig ist, und wobei der erste Messmagnet (6) das zweite Winkelmesssignal derart beeinflusst, dass das zweite Winkelmesssignal uneindeutig ist.

6. Spindelaktor nach Anspruch 5, wobei der erste Messmagnet (6) in jeder relativen Lage zum zweiten Messmagneten (12) maximal 10 mm, bevorzugt maximal 8 mm, entfernt liegt und der erste Messmagnet (12) eine größere, bevorzugt eine mindestens 2,5-fache, erste Magnetflussdichte im Vergleich zur zweiten Magnetflussdichte des zweiten Messmagneten aufweist.

7. Spindelaktor (2) nach Anspruch 5 oder 6, wobei der erste Messmagnet (6) und die Messwelle (11) mit dem zweiten Messmagnet (12) von der Abtriebsseite (19) der Antriebsspindel (4) gesehen hinter einer Antriebseinheit (20) endseitig angeordnet sind.

8. Hydraulische Gebereinheit (3) für eine Reibkupplung (21), aufweisend zumindest die folgenden Komponenten:

- einen Spindelaktor (2) nach einem der Ansprüche 5 bis 6,
- eine elektrische Antriebseinheit (20) zum gesteuerten Rotieren der Antriebsspindel (4);
- einen Geberkolben (22), welcher mit der Spindelmutter (5) zur translatorischen Bewegung fest verbindbar ist; und
- einen Geberzylinder (23) zur Aufnahme des Geberkolbens (22) und einer hydraulischen Flüssigkeit, wobei der Geberzylinder (23) mittels der hydraulischen Flüssigkeit kommunizierend mit einem Nehmerzylinder (24) verbindbar ist.

9. Reibkupplung (21) mit einer Rotationsachse (25) zum lösbaren Verbinden einer Abtriebswelle (26) mit einem Verbraucher (27), aufweisend zumindest die folgenden Komponenten:

- zumindest ein Reibpaket (28,29) mit zumindest einer Reibplatte (30,31,32,33,34,35) und zumindest einer korrespondierenden Reibscheibe (36,37,38,39), über welches im angepressten Zustand ein Drehmoment übertragbar ist
- zumindest eine Betätigungseinrichtung (40,41) mit einem Nehmerzylinder (24) zum Verpressen des zumindest einen Reibpakets (28,29); und
- zumindest eine kommunizierend verbindbare hydraulische Gebereinheit (3) nach Anspruch 8.

**Claims**

1. Method for calibrating an absolute displacement measurement device (1) of a spindle actuator (2) for a hydraulic master unit (3), the spindle actuator (2) having at least the following components:

   - a drive spindle (4) which has a plurality of thread turns with a defined thread pitch for the translational movement of a spindle nut (5), the drive spindle (4) having a first measuring magnet (6) at a first angular position (7) of the drive spindle (4), and the spindle nut (5) having a predetermined maximum displacement travel (10) between a starting position (8) and an end position (9);
   - a measuring shaft (11) having a second measuring magnet (12) at a second angular position (13) of the measuring shaft (11), it being possible for the measuring shaft (11) to be driven by the drive spindle (4) in a fixed transmission ratio with the drive spindle (4), the transmission ratio relative to the measuring shaft (11) being configured in such a way that the periodicity of the measuring shaft (11) corresponds to a complete revolution of the drive spindle (4) multiplied by the sum of an arbitrary first integer (m) and the reciprocal of a second integer (N), the second integer (N) having a greater magnitude than the number (G) of the thread turns of the drive spindle (4);
   - a first angle sensor (14) for detecting a first angle measurement signal from the first measuring magnet (6) by using a first magnetic field; and
   - a second angle sensor (15) for detecting a second angle measurement signal from the second measuring magnet (12) by using a second magnetic field,

   the method having at least the following steps:

   a. defining a single first angular position of the first measuring magnet for each complete revolution of the drive spindle (4) as a turn change;
   b. detecting the second angle measurement signal at at least one adjacent turn change;
   c. storing the second angle measurement signal as a calibration value assigned to the at least one adjacent turn change,

   in particular a translational absolute displacement position (16) of the spindle nut (5) being determined on the basis of the unambiguously determined thread turn with the aid of the mechanical relationship between the respective thread turn and the translational absolute displacement position (16) of the spindle nut (5), **characterized in that** the second measuring magnet (12) exerts at most such a negligible influence on the first angle measurement signal that the first angle measurement signal is unambiguous, and wherein the first measuring magnet (6) influences the second angle measurement signal in such a way that the second angle measurement signal is ambiguous, wherein, in addition, at least the following steps are carried out:

   a'. travelling through the individual thread turns of the drive spindle;
   b'. at each turn change, detecting the second angle measurement signal;
   c'. storing the second angle measurement signal as a calibration value assigned to the respectively adjacent turn change.

2. Calibration method according to Claim 1, wherein in a step c. an upper limit and a lower limit of a deviation range from the calibration value are determined and stored in such a way that a first angle measurement signal, together with an associated second angle measurement signal, in the deviation range of the calibration value permits an unambiguous determination of the thread turn that is present, wherein the upper limit and the lower limit are preferably determined on the basis of at least one of the following measures:

   - determination on the basis of a mathematical relationship;
   - determination on the basis of empirical measured data;
   - determination on the basis of a repeated calibration procedure according to Claim 1.

3. Method for control of the position of a spindle nut (5) of a spindle actuator (2) for a hydraulic master unit (3) with an absolute displacement measurement device (1) which is calibrated in accordance with a method for calibration according to one of the preceding claims, having at least the following steps:

   i. moving to an adjacent turn change;

ii. detecting the second angle measurement signal;

iii. determining the thread turn from the stored calibration values;

iv. outputting the thread turn determined and, as a result in particular, determining the translational absolute displacement position (16) of the spindle nut (5).

**4.** Control method according to Claim 3, wherein, following an unambiguous determination of a thread turn, only the position of the first measuring magnet (6) is detected, and the absolute displacement position of the spindle nut (5) is therefore determined incrementally, wherein, following a memory loss of the absolute displacement position, and preferably after a predetermined time interval, the absolute displacement position of the spindle nut (5) is determined by means of the method for control according to Claim 4 by means of detecting the second angle measurement signal.

**5.** Spindle actuator (2) for a hydraulic master unit (3), having at least the following components:

- a drive spindle (4) which, on the output side, has a plurality of thread turns with a defined thread pitch, for the translational movement of a spindle nut (5), the drive spindle (4) having a first measuring magnet (6) at a first angular position (7) of the drive spindle (4), and the spindle nut (5) having a predetermined maximum displacement travel (10) between a starting position (8) and an end position (9);

- a measuring shaft (11) having a second measuring magnet (12) at a second angular position (13) of the measuring shaft (11), it being possible for the measuring shaft (11) to be driven by the drive spindle (4) in a fixed transmission ratio with the drive spindle (4), the transmission ratio relative to the measuring shaft (11) being configured in such a way that the periodicity of the measuring shaft (11) corresponds to a complete revolution of the drive spindle (4) multiplied by the sum of an arbitrary first integer (m) and the reciprocal of a second integer (N), the second integer (N) having a greater magnitude than the number (G) of the thread turns of the drive spindle (4);

- a first angle sensor (14) for detecting a first angle measurement signal from the first measuring magnet (6) by using a first magnetic field; and

- a second angle sensor (14) for detecting a second angle measurement signal from the second measuring magnet (12) by using a second magnetic field, **characterized in that** the second measuring magnet (12) exerts at most such a negligible influence on the first angle measurement signal that the first angle measurement signal is unambiguous, and wherein the first measuring magnet (6) influences the second angle measurement signal in such a way that the second angle measurement signal is ambiguous.

**6.** Spindle actuator according to Claim 5, wherein the first measuring magnet (6), in each relative position to the second measuring magnet (12), is located at most 10 mm, preferably at most 8 mm, away, and the first measuring magnet (12) has a greater, preferably an at least 2.5 times greater first magnetic flux density, in comparison with the second magnetic flux density of the second measuring magnet.

**7.** Spindle actuator (2) according to Claim 5 or 6, wherein the first measuring magnet (6) and the measuring shaft (11) having the second measuring magnet (12), seen from the output side (19) of the drive spindle (4), are arranged at the end, downstream of a drive unit (20).

**8.** Hydraulic master unit (3) for a friction clutch (21), having at least the following components:

- a spindle actuator (2) according to either of Claims 5 and 6;

- an electric drive unit (20) for the controlled rotation of the drive spindle (4);

- a master piston (22), which can be connected firmly to the spindle nut (5) for the translational movement; and

- a master cylinder (23) to accommodate the master piston (22) and a hydraulic fluid, wherein the master cylinder (23) can be connected to a slave cylinder (24), so as to communicate by means of the hydraulic fluid.

**9.** Friction clutch (21) having an axis of rotation (25) for the detachable connection of an output shaft (26) to a load (27), having at least the following components:

- at least one friction pack (28, 29) having at least one friction plate (30, 31, 32, 33, 34, 35) and at least one corresponding friction disc (36, 37, 38, 39), via which, in the pressed-on state, a torque can be transmitted;

- at least one actuating device (40, 41) having a slave cylinder (24) for pressing the at least one friction pack (28, 29); and

- at least one hydraulic master unit (3) according to Claim 8, that can be connected so as to communicate.

**Revendications**

1. Procédé d'étalonnage d'un dispositif de mesure de déplacement absolu (1) d'un actionneur à broche (2) pour une unité de transmetteur (3) hydraulique, l'actionneur à broche (2) possédant au moins les composants suivants :

   - une broche d'entraînement (4), laquelle possède une pluralité de filets ayant un pas de filetage défini, servant au déplacement en translation d'un écrou de broche (5), la broche d'entraînement (4) possédant un premier aimant de mesure (6) au niveau d'une première position angulaire (7) de la broche d'entraînement (4), et l'écrou de broche (5) possédant une course de déplacement maximale (10) prédéterminée entre une position de départ (8) et une position finale (9) ;
   - un arbre de mesure (11) comprenant un deuxième aimant de mesure (12) au niveau d'une deuxième position angulaire (13) de l'arbre de mesure (11), l'arbre de mesure (11) pouvant être entraîné par la broche d'entraînement (4) dans une démultiplication fixe avec la broche d'entraînement (4), la démultiplication de l'arbre de mesure (11) étant conçue de telle sorte que la périodicité de l'arbre de mesure (11) correspond à un tour complet de la broche d'entraînement (4) multiplié par la somme d'un premier nombre entier (m) quelconque et de l'inverse d'un deuxième nombre entier (N), la valeur absolue du deuxième nombre entier (N) étant supérieure au nombre (G) de filets de la broche d'entraînement (4) ;
   - un premier capteur d'angle (14) destiné à acquérir un premier signal de mesure d'angle provenant du premier aimant de mesure (6) avec un premier champ magnétique ; et
   - un deuxième capteur d'angle (15) destiné à acquérir un deuxième signal de mesure d'angle provenant du deuxième aimant de mesure (12) avec un deuxième champ magnétique,

   le procédé comprenant au moins les étapes suivantes :

   a. définition d'une première position angulaire unique du premier aimant de mesure par tour complet de la broche d'entraînement (4) en tant que changement de filet,
   b. acquisition du deuxième signal de mesure d'angle en présence d'au moins un changement de filet appliqué ;
   c. mise en mémoire du deuxième signal de mesure d'angle en tant que valeur d'étalonnage associée à l'au moins un changement de filet,

   une position de déplacement absolu (16) en translation de l'écrou de broche (5) étant notamment déterminée, en se basant sur le filet en présence déterminé univoquement, à l'aide de la relation mécanique entre le filet respectif et la position de déplacement absolu (16) en translation de l'écrou de broche (5), **caractérisé en ce que** le deuxième aimant de mesure (12) exerce au maximum sur le premier signal de mesure d'angle une influence négligeable au point que le premier signal de mesure d'angle est univoque, et le premier aimant de mesure (6) influençant le deuxième signal de mesure d'angle de telle sorte que le deuxième signal de mesure d'angle est non univoque, au moins les étapes suivantes étant en plus exécutées :

   a'. traversée des filets individuels de la broche d'entraînement,
   b'. à chaque changement de filet, acquisition du deuxième signal de mesure d'angle ;
   c'. mise en mémoire du deuxième signal de mesure d'angle en tant que valeur d'étalonnage associée au changement de filet respectivement appliqué.

2. Procédé d'étalonnage selon la revendication 1, une limite supérieure et une limite inférieure d'une plage d'écart par rapport à la valeur d'étalonnage étant déterminées et mises en mémoire à l'étape c. de telle sorte qu'un premier signal de mesure d'angle, conjointement avec un deuxième signal de mesure d'angle associé autorise une détermination univoque du filet en présence dans la plage d'écart de la valeur d'étalonnage, la limite supérieure et la limite inférieure étant de préférence déterminées sur la base d'au moins l'une des dispositions suivantes :

   - détermination sur la base d'une relation mathématique ;
   - détermination sur la base de données de mesure empiriques ;
   - détermination sur la base d'une opération d'étalonnage répétée selon la revendication 1.

3. Procédé de commande de la position d'un écrou de broche (5) d'un actionneur à broche (2) pour une unité de transmetteur (3) hydraulique avec un dispositif de mesure de déplacement absolu (1), lequel est étalonné conformément à un procédé d'étalonnage selon l'une des revendications précédentes, comprenant au moins les étapes suivantes :

i. passage à un changement de filet voisin ;

ii. acquisition du deuxième signal de mesure d'angle ;

iii. détermination du filet à partir des valeurs d'étalonnage mises en mémoire ;

iv. délivrance en sortie du filet déterminé et ainsi notamment détermination de la position de déplacement absolu (16) en translation de l'écrou de broche (5).

4. Procédé de commande selon la revendication 3, selon lequel, après une détermination univoque d'un filet, seule la position du premier aimant de mesure (6) est acquise et la position de déplacement absolu de l'écrou de broche (5) est ainsi déterminée de manière incrémentale, après une perte de mémoire de la position de déplacement absolu et de préférence après un intervalle de temps prédéfini, la position de déplacement absolu de l'écrou de broche (5) étant déterminée à l'aide du procédé de commande selon la revendication 4 au moyen de l'acquisition du deuxième signal de mesure d'angle.

5. Actionneur à broche (2) pour une unité de transmetteur (3) hydraulique, possédant au moins les composants suivants :

- une broche d'entraînement (4), laquelle possède du côté de l'entraînement une pluralité de filets ayant un pas de filetage défini, servant au déplacement en translation d'un écrou de broche (5), la broche d'entraînement (4) possédant un premier aimant de mesure (6) au niveau d'une première position angulaire (7) de la broche d'entraînement (4), et l'écrou de broche (5) possédant une course de déplacement maximale (10) prédéterminée entre une position de départ (8) et une position finale (9) ;

- un arbre de mesure (11) comprenant un deuxième aimant de mesure (12) au niveau d'une deuxième position angulaire (13) de l'arbre de mesure (11), l'arbre de mesure (11) pouvant être entraîné par la broche d'entraînement (4) dans une démultiplication fixe avec la broche d'entraînement (4), la démultiplication de l'arbre de mesure (11) étant conçue de telle sorte que la périodicité de l'arbre de mesure (11) correspond à un tour complet de la broche d'entraînement (4) multiplié par la somme d'un premier nombre entier (m) quelconque et de l'inverse d'un deuxième nombre entier (N), la valeur absolue du deuxième nombre entier (N) étant supérieure au nombre (G) de filets de la broche d'entraînement (4) ;

- un premier capteur d'angle (14) destiné à acquérir un premier signal de mesure d'angle provenant du premier aimant de mesure (6) avec un premier champ magnétique ; et

- un deuxième capteur d'angle (14) destiné à acquérir un deuxième signal de mesure d'angle provenant du deuxième aimant de mesure (12) avec un deuxième champ magnétique, **caractérisé en ce que** le deuxième aimant de mesure (12) exerce au maximum sur le premier signal de mesure d'angle une influence négligeable au point que le premier signal de mesure d'angle est univoque, et le premier aimant de mesure (6) influençant le deuxième signal de mesure d'angle de telle sorte que le deuxième signal de mesure d'angle est non univoque.

6. Actionneur à broche selon la revendication 5, le premier aimant de mesure (6), dans chaque position relative, se trouvant à une distance maximale de 10 mm, de préférence maximale de 8 mm du deuxième aimant de mesure (12) et le premier aimant de mesure (12) possédant une première densité de flux magnétique plus grande, de préférence au moins de 2,5 fois la densité de flux magnétique du deuxième aimant de mesure.

7. Actionneur à broche selon la revendication 5 ou 6, le premier aimant de mesure (6) et l'arbre de mesure (11) avec le deuxième aimant de mesure (12), vus depuis le côté entraînement (19) de la broche d'entraînement (4), étant disposée du côté de l'extrémité derrière une unité d'entraînement (20).

8. Unité de transmetteur (3) hydraulique pour un accouplement à friction (21), comprenant au moins les composants suivants :

- un actionneur à broche (2) selon l'une des revendications 5 à 6,

- une unité d'entraînement électrique (20) servant à la mise en rotation commandée de l'actionneur à broche (2) ;

- un piston transmetteur (22) qui peut être relié à demeure avec l'écrou de broche (5) en vue d'un mouvement en translation ; et

- un cylindre transmetteur (23) destiné à accueillir le piston transmetteur (22) et un liquide hydraulique, le cylindre transmetteur (23) pouvant être relié à un cylindre récepteur (24) en communication au moyen du liquide hydraulique.

9. Accouplement à friction (21) comprenant un axe de rotation (25) destiné à relier de manière amovible un arbre d'entraînement (26) à un consommateur (27), comprenant au moins les composants suivants :

- au moins un bloc de friction (28, 29) pourvu d'au moins une plaque de friction (30, 31, 32, 33, 34, 35) et d'au moins un disque de friction (36, 37, 38, 39) correspondant, par le biais duquel un couple peut être transmis dans l'état de pressage,
- au moins un dispositif d'actionnement (40, 41) pourvu d'un cylindre récepteur (24) destiné à presser l'au moins un bloc de friction (28, 29) ; et
- au moins une unité de transmetteur (3) hydraulique selon la revendication 8, qui peut être reliée en communication.

Fig. 1

Fig. 2

Fig. 3

Fig. 4

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010047801 A1
- US 2014105768 A1
- DE 19506938 A1
- DE 102009048389 A1
- DE 102010010215 A1